# EUROPÄISCHE PATENTSCHRIFT

(11) **EP 0 828 781 B1**
(45) Veröffentlichungstag und Bekanntmachung des Hinweises auf die Patenterteilung: **13.01.1999**
(21) Anmeldenummer: 96916106.6
(22) Anmeldetag: 17.05.1996
(51) Int. Cl.: C08J 9/18, C08J 9/12

(54) **VERFAHREN ZUR HERSTELLUNG VON EXPANDIERTEN POLYOLEFIN-PARTIKELN**
PROCESS FOR PREPARING EXPANDED POLYOLEFIN PARTICLES
PROCEDE POUR PREPARER DES PARTICULES DE POLYOLEFINE EXPANSEES

(30) Priorität: 26.05.1995 DE 19519336
(43) Veröffentlichungstag der Anmeldung: 18.03.1998
(73) Patentinhaber: BASF AKTIENGESELLSCHAFT, 67056 Ludwigshafen (DE)
(72) Erfinder: KÖGEL, Wolfram, D-68309 Mannheim (DE); DE GRAVE, Isidoor, D-67157 Wachenheim (DE); HAHN, Klaus, D-67281 Kirchheim (DE); FISCHER, Joachim, D-67229 Gro karlbach (DE)
(86) Internationale Anmeldenummer: EP9602116
(87) Internationale Veröffentlichungsnummer: WO9637541

(56) Entgegenhaltungen:
- EP-A- 0 164 855
- DE-A- 2 256 480
- DE-A- 3 923 913
- DATABASE WPI Section Ch, Derwent Publications Ltd., London, GB; Class A13, AN 73-37189U XP002008207 & JP,B,48 020 427 (KOKOKU CHEMICAL IND CO LT)

## Beschreibung

Die Erfindung betrifft ein Verfahren zur Herstellung von expandierten Polyolefin(EPO)-Partikeln durch Imprägnieren von Polyolefin-Granulat mit einem flüchtigen Treibmittel in Suspension unter Druck bei erhöhter Temperatur.

Das genannte Verfahren ist an sich bekannt und wird in großtechnischem Maßstab betrieben. Nach EP-A 53 333 und EP-A 123 144 werden als Treibmittel organische Verbindungen, wie Halogenkohlenwasserstoffe, z.B. Dichlordifluormethan, oder Kohlenwasserstoffe, z.B. Butan eingesetzt. Solche organischen Treibmittel sind jedoch aus verschiedenen Gründen, z.B. wegen ihrer geringen Umweltverträglichkeit, Brennbarkeit oder Toxizität nicht unbedenklich.

In EP-A 113 903 und EP-A 168 954 wird deshalb Kohlendioxid als Treibmittel vorgeschlagen. Mit CO₂ muß jedoch bei verhältnismäßig hohem Druck gearbeitet werden, was in vielen Fällen von Nachteil ist.

Der Erfindung lag also die Aufgabe zugrunde, ein alternatives flüchtiges Treibmittel für die EPO-Herstellung bereitzustellen.

Es wurde gefunden, daß Ammoniak ein geeignetes Treibmittel ist.

Gegenstand der Erfindung ist demzufolge ein Verfahren zur Herstellung von EPO-Partikeln durch Imprägnieren von PolyolefinGranulat mit mindestens 1 Gew.-% Ammoniak in Suspension unter Druck bei erhöhter Temperatur und anschließendem Entspannen.

In DE-A 38 00 650 und 39 23 913 ist die Herstellung von Schaumstoffen beschrieben, wobei Kohlendioxid oder Ammoniak in flüssiger Form in einen geschmolzenen Thermoplasten, z.B. ein Polyolefin oder Polystyrol, eingepreßt und die Schmelze unter Aufschäumen extrudiert wird. Hier handelt es sich um ein prinzipiell andersartiges Schäumverfahren als bei der vorliegenden Erfindung. Dieses Extrusions-Schäumverfahren hat den grundsätzlichen Nachteil, daß modifizierte Polymere eingesetzt werden müssen (EP-A 0 588 321), die Raum-Zeit-Ausbeute gering ist und die Schüttdichte nur in einem engen Bereich variiert werden kann. Die nach der Extrusionstechnik zugänglichen Schaumstoffpartikel zeigen zudem ein enges Verarbeitungsspektrum und liefern Schaumstoff-Formteile mit einem unbefriedigenden mechanischen Eigenschaftsprofil.

Bei dem erfindungsgemäßen Verfahren soll nicht ausgeschlossen sein, daß Ammoniak auch in Kombination mit anderen Treibmitteln eingesetzt wird. Als Cotreibmittel können z.B. Stickstoff, Edelgase, Kohlendioxid sowie in geringen Mengen Kohlenwasserstoffe wie Propan, Butane, Pentane, Heptane, Octane, Cyclopentan und Cyclohexan verwendet werden.

Polyolefine im Sinne der vorliegenden Erfindung sind
a) Homopolypropylen,
b) Randomcopolymere des Propylens mit 0,1 bis 15, vorzugsweise 0,5 bis 12 Gew.-% Ethylen und/oder einem C₄-C₁₀-α-Olefin, vorzugsweise ein Copolymer von Propylen mit 0,5 bis 6 Gew.-% Ethylen oder mit 0,5 bis 15 Gew.-% Buten-1 oder ein Terpolymer aus Propylen, 0,5 bis 6 Gew.-% Ethylen und 0,5 bis 6 Gew.-% Buten-1, oder
c) Mischungen von a) oder b) mit 0,1 bis 75, vorzugsweise 3 bis 50 Gew.-% eines Polyolefin-Elastomeren, z.B. eines Ethylen/ Propylen-Blockcopolymeren mit 30 bis 70 Gew.-% Propylen.
d) Polyethylen (PE-LLD, -LD, -MD, -HD) und
e) Mischungen aus den unter a bis d genannten Polyolefinen (gegebenenfalls nach Zugabe von Phasenvermittlern).

Der Kristallitschmelzpunkt (DSC-Maximum) der unter a. bis e. aufgelisteten Polyolefine liegt im allgemeinen zwischen 90 und 170°C. Ihre Schmelzwärme, bestimmt nach der DSC-Methode, liegt vorzugsweise zwischen 20 und 300 J/g, der Schmelzindex MFI (230°C, 2,16 kp für Propylenpolymerisate und 190°C, 2,16 kp für Ethylenpolymerisate) nach DIN 53 735 zwischen 0,1 und 100 g/10 min.

Bei der Herstellung der EPO-Partikel geht man von Polyolefingranulat aus, welches vorzugsweise mittlere Durchmesser von 0,2 bis 10, insbesondere 0,5 bis 5 mm aufweist. In einem Rührreaktor werden 100 Gew.-Teile dieses Granulats in 100 bis 500 Gew.-Teilen Flüssigkeit, vorzugsweise Wasser, mit 0,1 bis 10 Gew.-Teilen, vorzugsweise 1 bis 7 Gew.-Teilen eines Suspendierhilfsmittels dispergiert. Beispiele für geeignete Suspendierhilfsmittel sind Tricalciumphosphat, Calciumcarbonat, Kieselerde und Aluminiumoxid. Als Suspendierflüssigkeit können auch Alkohole, wie Ethanol oder Mischungen von Alkoholen mit Wasser verwendet werden.

Dann wird das Treibmittel in Mengen von mindestens 1, vorzugsweise von 2 bis 50 Gew.-Teilen, insbesondere 10 bis 30 Gew.-Teilen, bezogen auf 100 Gew.-Teile Polymer, eingepreßt und der Reaktorinhalt aufgeheizt.

Die Treibmittelzugabe kann dabei vor oder während des Aufheizens (dazu gehören auch Haltezeiten) des Reaktorinhalts auf die Entspannungstemperatur erfolgen. Diese sollte 5°C unter bis 20°C über, vorzugsweise 2 bis 10°C über dem Kristallitschmelzpunkt des Polyolefins liegen. Bei Verwendung von Mischungen aus Ammoniak und einem oder mehreren anderen Treibmitteln liegt die Imprägniertemperatur in Abhängigkeit von der Zusammensetzung des Treibmittelgemischs 20°C unter bis 20°C über dem Kristallitschmelzpunkt des Polyolefins. Bei den bevorzugten Propylenpolymerisaten arbeitet man bei 110°C bis 180°C.

Je nach Menge und Art des Treibmittels sowie nach der Höhe der Temperatur stellt sich im Reaktor ein Druck ein, der im allgemeinen höher als 2 bar ist und 100 bar nicht übersteigt.

Durch die Wahl der Imprägniertemperatur und des Treibmittels kann die Schüttdichte der entstandenen EPO-Partikel gesteuert werden. Nach Erreichen der Entspannungstemperatur wird der Reaktor entspannt, wobei die Entspannung zweckmäßigerweise in einen Zwischenbehälter erfolgt, in dem ein Druck von vorzugsweise 0,5 bis 5 bar herrscht. Aus dem Zwischenbehälter kann das Ammoniak sowie die Cotreibmittel zurückgewonnen werden.

Beim Entspannen des Reaktors erfolgt eine Expansion des treibmittelhaltigen Polyolefin-Granulats und es entstehend EPO-Partikel mit einem mittleren Durchmesser von 1 bis 20 mm.

Die Schüttdichte der EPO-Partikel ist in weiten Grenzen zwischen 10 und 300, vorzugsweise zwischen 40 und 200 g/l einstellbar. Das Verfahren ist besonders geeignet zur Herstellung von EPO-Partikeln mit verhältnismäßig hohen Schüttdichten zwischen 60 und 150 g/l. Die EPO-Partikel sind überwiegend geschlossenzellig und besitzen eine Zellzahl von 1 bis 5000 Zellen/mm², vorzugsweise 2 bis 3000 Zellen/mm², insbesondere 10 bis 1500 Zellen/mm².

Die EPO-Partikel können nach üblichen Verfahren mit Wasserdampf oder Heißluft zu Schaumstoff-Formteilen verschweißt werden, welche in der Automobil-, Verpackungs- und Freizeitindustrie Anwendung finden.

### Beispiele

### Beispiel 1

In einem Rührreaktor werden 100 Gew.-Teile eines Propylen-Ethylen-Randomcopolymeren mit einem Ethylengehalt von 2,2 Gew.-% und 4 Gew.-Teile Tricalciumphosphat in 180 Gew.-Teilen 45°C Wasser dispergiert. Dann wird der Reaktor verschlossen und 20 Gew.-Teile Ammoniak eingepreßt. Der Reaktorinhalt wird innerhalb von 50 min auf eine Temperatur von 152°C aufgeheizt. Dabei steigt der Druck auf ca. 10 bar an. Dann wird der Inhalt des Reaktors durch ein Ventil am Boden in einen Zwischenbehälter entspannt, in dem sich ein Druck von 1,7 bar aufbaut. Durch Nachpressen von Stickstoff wird der Druck im Imprägnierbehälter während der Entspannung bei 20 bar konstant gehalten. Nach der Entfernung des Tricalciumphosphats und Trocknung haben die erhaltenen EPP-Partikel eine Schüttdichte von 62 g/l.

### Beispiel 2

Das Beispiel 1 wird wiederholt; es wird aber auf eine Temperatur von 151,5°C erwärmt. Die Schüttdichte der erhaltenen EPP-Partikel liegt bei 74 g/l.

### Beispiel 3

Das Beispiel 1 wird wiederholt; es wird aber eine Ammoniakmenge von 2 Gew.-Teilen zugegeben und auf eine Temperatur von 154°C erwärmt. Die Schüttdichte der erhaltenen Schaumstoffpartikel liegt bei 295 g/l.

## Patentansprüche

1. Verfahren zur Herstellung von expandierten Polypropylen-(EPP)-Partikeln durch Imprägnieren von Granulat aus einem Copolymeren des Propylens mit 0,1 bis 15 Gew.-% Ethylen und/ oder einem C₄-C₁₀-α-olefin mit mindestens 1 Gew.-% eines flüchtigen Treibmittels in wässriger Suspension unter Druck bei Temperaturen zwischen 110°C und 180°C und anschließendem Entspannen, dadurch gekennzeichnet, daß das Treibmittel Ammoniak ist.

2. Verfahren zur Herszellung von expandierten EPP-Partikeln nach Anspruch 1, dadurch gekennzeichnet, daß als Cotreibmittel Stickstoff oder Kohlendioxid eingesetzt werden.

3. Verwendung der nach Anspruch 1 erhaltenen EPP-Partikel zur Herstellung von Schaumstoff-Formteilen.

## Claims

1. A process for producing expanded polypropylene (EPP) particles by impregnation of granules consisting of a copolymer of propylene containing from 0.1 to 15 % by weight of ethylene and/or a C₄-C₁₀-α-olefin with at least 1 % by weight of a volatile blowing agent in aqueous suspension under pressure at from 110°C to 180°C and subsequent decompression, wherein the blowing agent is ammonia.

2. A process for producing expanded EPP particles as claimed in claim 1, wherein nitrogen or carbon dioxide is used as auxiliary blowing agent.

3. Use of the EPP particles obtained as claimed in claim 1 for producing foam moldings.

## Revendications

1. Procédé pour préparer des particules de polypropylène expansées (EPP) par imprégnation d'un granulé constitué d'un copolymère du propylène avec 0,1 à 15 % en poids d'éthylène et/ou d'une α-oléfine en C₄-C₁₀ avec au moins 1% en poids d'un agent d'expansion volatil en suspension aqueuse sous pression à des températures entre 110°C et 180°C et par détente subséquente, caractérisé en ce que l'agent d'expansion est l'ammoniac.

2. Procédé pour préparer des particules d'EPP expansées selon la revendication 1, caractérisé en ce qu'on utilise l'azote ou le dioxyde de carbone à titre d'agent d'expansion complémentaire.

3. Utilisation des particules d'EPP obtenues selon la revendication 1 pour la préparation d'objets moulés en mousse.
